Europäisches Patentamt

**European Patent Office**

Office européen des brevets

(19)

(11) Numéro de publication: **0 369 839 B1**

(12)

# FASCICULE DE BREVET EUROPEEN

(45) Date de publication de fascicule du brevet: **25.05.94** (51) Int. Cl.5: **G11B 5/245**, G11B 5/17

(21) Numéro de dépôt: **89402896.8**

(22) Date de dépôt: **20.10.89**

(54) **Tête magnétique à entrefer saturable et dispositif matriciel comportant un ensemble de telles têtes.**

(30) Priorité: **15.11.88 FR 8814806**

(43) Date de publication de la demande:
**23.05.90 Bulletin 90/21**

(45) Mention de la délivrance du brevet:
**25.05.94 Bulletin 94/21**

(84) Etats contractants désignés:
**DE GB IT NL**

(56) Documents cités:
**EP-A- 0 097 836**
**FR-A- 2 605 783**
**US-A- 3 485 962**
**US-A- 4 380 768**
**US-A- 4 646 184**

**PATENT ABSTRACTS OF JAPAN, vol. 7, no. 70 (P-185)(1215), 23 mars 1983**

**PATENT ABSTRACTS OF JAPAN, vol. 12, no. 313, P745, 25 August 1988**

(73) Titulaire: **THOMSON-CSF**
**173, Boulevard Haussmann**
**F-75008 Paris(FR)**

(72) Inventeur: **Colineau, Joseph**
**THOMSON-CSF**
**SCPI**
**Cédex 67**
**F-92045 Paris la Défense(FR)**
Inventeur: **Machui, Jurgen**
**THOMSON-CSF**
**SCPI**
**Cédex 67**
**F-92045 Paris la Défense(FR)**

(74) Mandataire: **Grynwald, Albert et al**
**THOMSON-CSF,**
**SCPI,**
**B.P. 329,**
**50, rue Jean-Pierre Timbaud**
**F-92402 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 369 839 B1

**Description**

L'invention est relative à un dispositif matriciel d'enregistrement à pluralité de têtes.

Une tête magnétique est un dispositif d'inscription et/ou de lecture des informations sur un support magnétique. L'inscription est réalisée en faisant varier localement l'aimantation du support.

Une telle tête comprend deux pôles magnétiques séparés par un entrefer amagnétique. Pour l'enregistrement d'informations un champ magnétique est induit dans un circuit magnétique comprenant les deux pôles et le support magnétique est appliqué contre les extrémités des pôles et contre l'entrefer. De ce fait le circuit magnétique se forme par le support au droit do l'entrefer, ce qui permet l'aimantation (ou la désaimantation) du support à cet endroit.

La lecture d'informations inscrites sur le support est obtenue par un signal électrique qui résulte d'une force électromotrice induite par la variation do flux magnétique dans le circuit magnétique fermé par le support. Cette variation de flux provient de la variation de l'aimantation sur le support quand ce dernier se déplace par rapport à la tête ou, inversement, quand la tête se déplace par rapport au support.

Pour certaines applications on considère qu'un signal est inscrit sur le support magnétique seulement quand l'aimantation de ce support dépasse un seuil déterminé. Les aimantations du support inférieures au seuil provoquent, lors de la lecture, des signaux parasites qu'il est préférable d'éliminer par des dispositions particulières du circuit de lecture.

Selon le document US-A-3 485 962 on prévoit de n'aimanter le support d'enregistrement que lorsque le flux magnétique dépasse un seuil déterminé, ce qui élimine les parasites lors de la lecture.

A cet effet l'entrefer de la tête magnétique comporte un matériau magnétique à saturation inférieure à celle du matériau constituant les pôles et tel que, lorsque ce matériau n'est pas saturé, le champ magnétique reste dans l'entrefer et ne passe donc pas par le support. C'est seulement quand l'entrefer est saturé que le support peut être aimanté car, alors, le flux magnétique peut s'échapper du matériau d'entrefer.

Quand l'excitation du circuit magnétique est faible, l'entrefer n'est pas saturé et la réluctance du circuit magnétique est faible; il en résulte que le matériau de l'entrefer peut se saturer aisément. Dans certains cas cette propriété s'oppose au but recherché, à savoir éviter l'inscription d'informations sur le support magnétique pour les faibles excitations. Pour diminuer l'effet de la variation de réluctance introduite par l'entrefer saturable, dans une réalisation de l'invention on prévoit dans le circuit magnétique de la tête, en-dehors de l'entrefer, un élément non magnétique qui augmente d'une valeur importante la réluctance totale du circuit.

Cette réluctance est obtenue en disposant une couche de matériau non magnétique entre le circuit magnétique auquel sont associés les fils d'excitation et l'ensemble formé par les deux pôles et l'entrefer.

Une tête magnétique du type indiqué ci-dessus est particulièrement utile pour réaliser un dispositif à pluralité de têtes magnétiques selon l'invention dans lequel les têtes sont disposées sous forme d'un réseau matriciel et, pour l'excitation des têtes, on prévoit un réseau de fils conducteurs associés à ce réseau matriciel de façon que chaque tête soit couplée à un fil de ligne et un fil de colonne. L'intensité du courant électrique dans chacun des deux conducteurs d'une tête inscrivant une information sur le support présente une première valeur; les têtes ne devant pas inscrire d'informations sont associées à au moins un conducteur parcouru par un courant d'une intensité ayant une second valeur déterminée, inférieure en valeur absolue à la première valeur. Par exemple la première valeur est un courant d'intensité I et la seconde valeur est un courant d'intensité - I/3. Dans ce cas on choisit les caractéristiques de chaque tête magnétique de façon telle que le support soit aimanté seulement lorsque la somme des intensités dans les deux fils d'une tête est supérieure à la valeur 2I/3.

Pour l'adressage, en variante, un conducteur associé à une tête inscrivant une information sur le support est parcouru par deux impulsions successives de polarités opposées et l'autre conducteur associé à la tête est parcouru par un courant d'intensité constante, la somme de cette intensité constante et de l'intensité de l'impulsion de même signe que ce courant constant étant suffisante pour inscrire une information tandis que la somme de l'intensité constante et de l'impulsion de polarité opposée est insuffisante pour inscrire une information, c'est-à-dire aimanter le support.

Dans cette variante l'intensité du courant constant est par exemple environ la moitié de l'intensité d'une impulsion dans un sens.

D'autres caractéristiques et avantages de l'invention apparaîtront avec la description de certains de ses modes de réalisation, celle-ci étant effectuée en se référant aux dessins ci-annexés sur lesquels :
- la figure 1 est une vue schématique en perspective d'un dispositif matriciel à pluralité de têtes magnétiques selon l'invention,
- la figure 2 est un schéma montrant un adressage d'un dispositif matriciel,

- la figure 3 correspond à une variante de la figure 2,
- la figure 4 est un schéma d'une tête magnétique selon l'invention, et
- les figures 5 à 8 sont des schémas et diagrammes illustrant le fonctionnement de la tête magnétique de la figure 4.

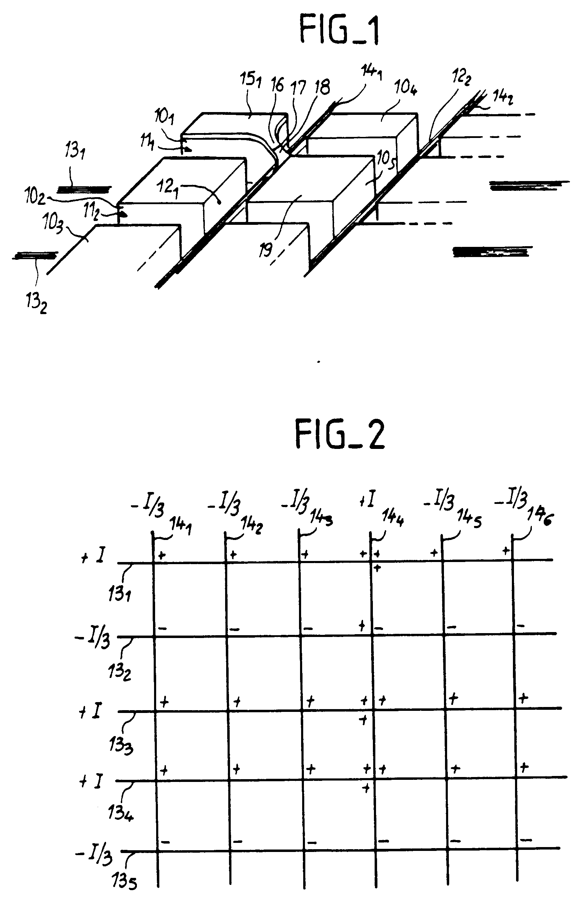

On a représenté sur la figure 1 un dispositif matriciel à têtes magnétiques selon l'invention pour l'enregistrement d'informations sur un support magnétique tel qu'un bande (non montrée) à pluralité de pistes.

Ce dispositif matriciel comporte une plaque en matériau magnétique, par exemple en ferrite, de laquelle sont en saillie des blocs $10_1$, $10_2$, $10_3$, $10_4$, $10_5$, etc... de section rectangulaire et séparés par des rainures $11_1$, $11_2$... $12_1$, $12_2$...

Les rainures $12_1$, $12_2$, etc sont parallèles entre elles et perpendiculaires aux rainures $11_1$, $11_2$...

Dans les rainures 11 de ligne sont disposés des fils conducteurs rectilignes $13_1$, $13_2$... Dans les rainures 12 de colonne sont également disposés des fils conducteurs rectilignes $14_1$, $14_2$....

La surface libre d'extrémité de chaque bloc magnétique $10_1$ rectangulaire est recouverte par une couche 15 d'un matériau magnétique qui se prolonge à un coin, dans la direction d'une diagonale du rectangle, selon une bande 16 séparée par un entrefer 17 d'une bande correspondante 18 prolongeant une autre couche magnétique 19 sur un bloc voisin $10_5$ dont la diagonale de la surface rectangulaire prolonge la diagonale correspondante du bloc $10_1$.

Les conducteurs $13_1$, $14_1$ qui sont au droit de l'entrefer 17 produisent un champ magnétique pour l'inscription d'une information sur un support magnétique qui, bien entendu, est disposé au voisinage de l'entrefer 17.

Dans un premier exemple (figure 2) certains des conducteurs sont parcourus par un courant d'intensité I et d'atures conducteurs sont parcourus par un courant d'intensité -I/3. Une tête magnétique inscrit une information sur le support magnétique quand les deux conducteurs associés à cette tête sont parcourus par un courant d'intensité I. Par contre si l'un des deux conducteurs, ou les deux conducteurs, est (sont) parcouru(s) par un courant d'intensité - I/3 il n'y a pas d'information inscrite par la tête magnétique correspondante sur le support magnétique.

On voit ainsi que lorsque le courant d'excitation a la valeur 2I, une information est inscrite; par contre quand ce courant d'excitation a la valeur 2I/3 ou -2I/3 aucune information n'est inscrite sur le support.

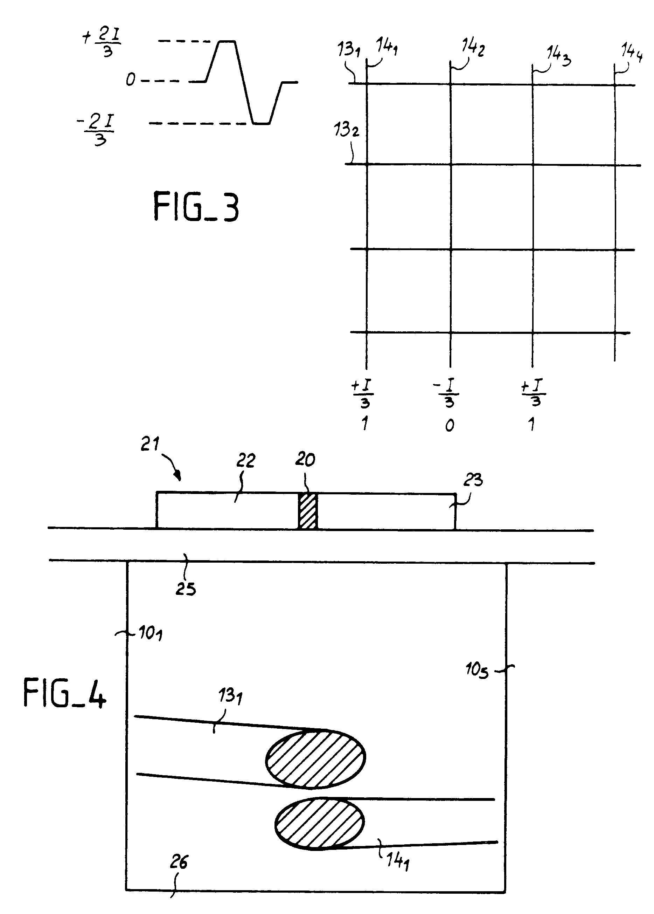

On comprend donc que pour un courant d'excitation d'intensité ± 2I/3, il est préférable que la tête magnétique ne provoque aucune aimantation du support alors que pour un courant d'excitation d'intensité 2I il est préférable que l'aimantation du support magnétique soit maximum. Ce but est atteint, conformément à l'invention, grâce à la tête qui sera décrite plus loin en relation avec la figure 4.

Dans un autre exemple (figure 3) pour l'inscription d'informations binaires (1 ou 0) chaque ligne est parcourue par deux impulsions successives : une impulsion positive, c'est-à-dire un courant d'intensité + 2I/3, suivie par une impulsion négative, c'est-à-dire un courant d'intensité -2I/3. Si on désire inscrire un chiffre "1", la colonne correspondante est parcourue par un courant + I/3 tandis que si on désire inscrire le chiffre "0" on fait passer un courant d'intensité -I/3 dans la colonne correspondante. Ainsi quand la colonne est parcourue par un courant d'intensité + I/3 au cours de l'impulsion positive 2I/3 de la ligne, le courant d'excitation à l'intensité I suffisante pour inscrire une information, tandis qu'au cours de l'impulsion négative -2I/3 sur la ligne, le courant d'excitation est -I/3, insuffisant pour inscrire une information.

De même quand une colonne est parcourue par un courant d'intensité -I/3 au cours de l'impulsion positive 2I/3 sur la ligne, le courant d'excitation de la tête correspondante est I/3, insuffisant pour inscrire une information tandis qu'au cours de l'impulsion négative le courant d'excitation est -I, ce qui permet l'inscription d'un "0".

Bien entendu dans le mode de réalisation de la figure 3, les lignes sont adressées une par une pour l'inscription d'informations.

Dans cette réalisation, comme dans la précédente, il est préférable qu'une excitation correspondant à une intensité de courant de + I/3 ou -I/3 ne provoque aucune aimantation du support alors qu'une excitation correspondant à un courant d'intensité I devra produire une aimantation maximum du support magnétique.

Pour obtenir ce résultat, le matériau 20 d'entrefer de la tête magnétique 21 selon l'invention (figure 4) est un matériau magnétique saturable à valeur de saturation inférieure à celle du matériau, ou des matériaux, constituant les pôles magnétiques 22 et 23.

Pour améliorer encore l'effet de l'entrefer 20 en matériau saturable, l'ensemble formé par les pôles 22 et 23 et l'entrefer 20 est séparé des blocs en ferrite $10_1$ et $10_5$ par une couche 25 en matériau non magnétique.

Le fonctionnement est le suivant :

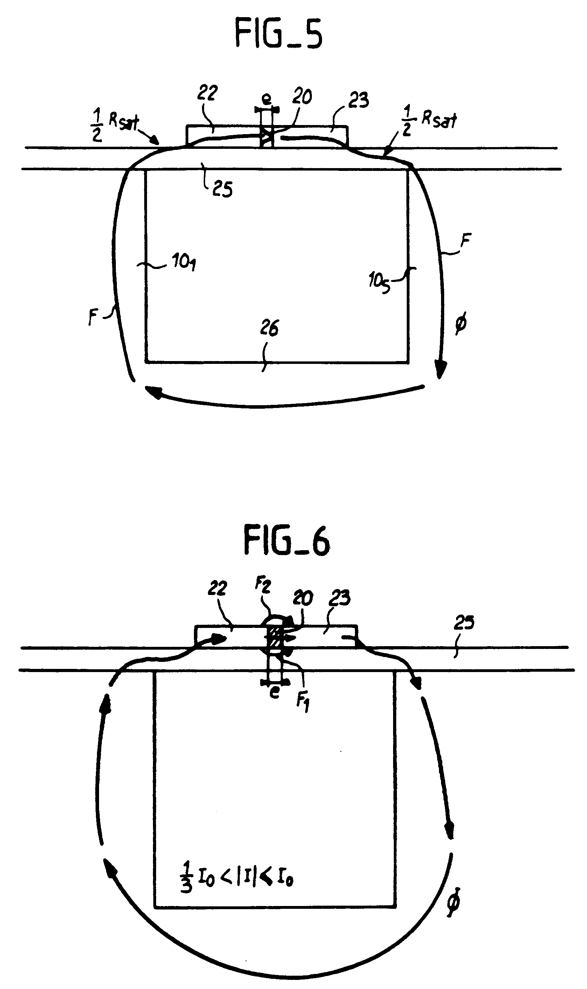

Lorsque la valeur absolue de la somme des courants d'excitation dans les conducteurs $13_1$ et $14_1$ est inférieure au tiers d'une valeur $I_0$ prédéterminée, le flux du champ magnétique, circule comme représenté par les flèches F sur la figure 5, dans le circuit magnétique comprenant : le substrat 26 en ferrite avec ses blocs en saillie $10_1$ et $10_5$, la couche non magnétique 25, les pôles 22 et 23 et l'entrefer 20. Dans ce cas (intensité inférieure à $I_0/3$) le matériau magnétique de l'entrefer 20 n'est pas saturé et, ainsi, le champ magnétique reste confiné dans cet entrefer.

Par contre quand la valeur absolue de la somme des intensités des courants circulant dans les conducteurs $13_1$ et $14_1$ dépasse la valeur $I_0/3$, le matériau constituant l'entrefer 20 est saturé et ainsi, comme représenté sur la figure 6, le champ magnétique ne reste pas confiné dans l'entrefer . Une partie $F_1$ passe dans la couche non magnétique 25 et une autre partie $F_2$ s'éloigne de cet entrefer à l'opposé de la couche 25. C'est cette partie $F_2$ du champ magnétique qui est utilisée pour l'écriture sur un support magnétique (non représenté).

On obtient bien le résultat recherché : le support magnétique n'est pas aimanté quand la valeur absolue de la somme des courants dans les conducteurs $13_1$ et $14_1$ ne dépasse pas $I_0/3$. Par contre l'aimantation du support magnétique intervient dès que ladite valeur absolue de la somme des intensités dépasse $I_0/3$, valeur à partir de laquelle le matériau de l'entrefer 20 est saturé.

Dans l'exemple les pôles 22 et 23 sont en sendust, c'est-à-dire en un alliage de fer, d'aluminium et de silicium comprenant par exemple en pourcentage atomique 74 % de fer, 9 % d'aluminium et 17 % de silicium.

Par contre le matériau de l'entrefer 20 est un sendust dégradé, c'est-à-dire un matériau à aimantation à saturation plus faible par exemple dont la proportion d'aluminium est supérieure à celle dudit sendust. Ce sendust dégradé contient en pourcentage atomique par exemple 64 % de fer, 15 % d'aluminium et 21 % de silicium.

En variante le matériau de l'entrefer 20 est une ferrite ou un autre matériau magnétique.

Il est également possible de réaliser l'entrefer dans le même matériau que les pôles 22 et 23, mais à condition de lui conférer une section plus faible que celle des pôles. Dans ce cas, c'est par exemple la profondeur (dimension perpendiculaire au support) de l'entrefer qui est plus petite que la profondeur des pôles.

La couche non magnétique 25 introduit dans le circuit magnétique une réluctance de forte valeur qui contribue à l'obtention du résultat recherché, à savoir la non saturation pour des intensités de courant qui, en valeur absolue, sont inférieures à $I_0/3$ et la saturation du matériau 20 pour des excitations de courant correspondant à des valeurs absolues supérieures à $I_0/3$.

Bien entendu la valeur de cette réluctance dépend des dimensions et de la géométrie du circuit magnétique ainsi que de la nature du matériau de l'entrefer.

Le fait que la saturation du matériau 20 intervienne pour un courant $I_0/3$ se traduit par la relation suivante :

$$R_{sat} = \frac{1}{3} \frac{I_0}{\phi_{sat}} \qquad (1)$$

Dans cette formule $R_{sat}$ représente la réluctance qu'introduit la couche non magnétique 25. Cette réluctance présente, dans l'exemple, deux parties d'égales valeurs $\frac{1}{2} R_{sat}$, l'une entre le bloc $10_1$ et le pôle 22 et l'autre entre le bloc $10_5$ et le pôle 23. On peut, jusqu'à la saturation du matériau 20, négliger la reluctance introduite par les autres éléments du circuit magnétique.

$\phi_{sat}$ représente le flux circulant dans le circuit magnétique. Ce flux est proportionnel à l'épaisseur e de l'entrefer 20 et à l'aimantation du matériau magnétique dans cet entrefer.

Pour obtenir une valeur maximum de flux d'écriture $F_2$ pour $I = I_0$ on se base sur les considérations suivantes :

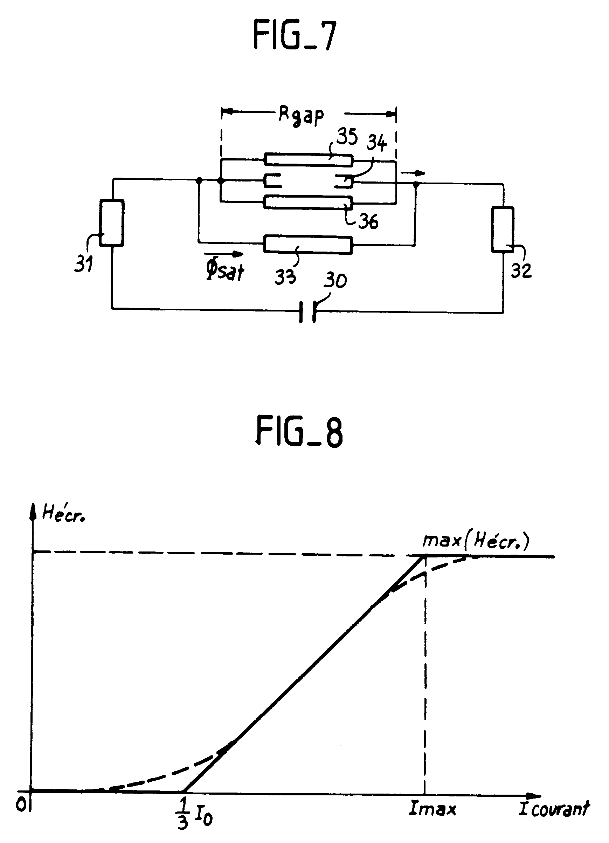

L'équivalent électrique du circuit magnétique de la figure 6 est représenté sur la figure 7 : le générateur 30 est un générateur de force magnétomotrice correspondant à un courant d'excitation I compris entre et $I_0/3$ et $I_0$. Les éléments 31 et 32 sont les deux éléments correspondant aux réluctances $\frac{1}{2} R_{sat}$. L'élément 33 en série entre les éléments 31 et 32 correspond à la réluctance du matériau d'entrefer non saturé. Sur cette réluctance 33 sont en parallèle trois autres réluctances 34, 35 et 36. La réluctance 34 correspond à la partie du flux dépassant la valeur de saturation qui passe dans l'entrefer 20. La réluctance 35 correspond au flux $F_2$ tandis que la réluctance 36 est la réluctance s'opposant au passage du flux $F_1$.

4

Le circuit représenté sur la figure 7 traduit le fait que, pour une intensité I comprise, en valeur absolue, entre $I_0/3$ et $I_0$, la partie $\phi_{sat}$ du flux qui provoque la saturation voit le matériau magnétique saturé, donc à faible perméabilité, tandis que le reste du flux $\phi - \phi_{sat}$ (engendré par le courant $I - I_0/3$) circule dans le circuit comme avec un entrefer classique rempli d'un matériau non magnétique. Dans ce cas la réluctance équivalente aux réluctances 33, 34, 35 et 36 en parallèle n'est pas petite devant la valeur des réluctances 31 et 32.

Le flux d'écriture $F_2$ est maximum pour $I = I_0$ si, pour ce courant, les pôles 22 et 23 se saturent. Au-delà de la saturation le champ magnétique d'écriture n'augmente plus. Cette propriété est représentée sur le diagramme de la figure 8 où l'on a porté, en abscisses, l'intensité I du courant d'excitation qui représente la somme des intensités dans les conducteurs $13_1$ et $14_1$ et, en ordonnées, le champ magnétique $H_{écr}$ d'écriture. On voit sur cette figure 8 que si $|I| < I_0/3$, le champ magnétique d'écriture est nul tandis que pour $|I| > I_{max}$ ($I_{max} = I_0$) le champ magnétique d'écriture reste pratiquement constant.

On pourra comprendre de façon plus précise le comportement du circuit magnétique à partir d'un exemple pour lequel :

$$R_{sat} = R_{gap} \qquad (2)$$

Dans cette formule $R_{gap}$ représente la réluctance équivalent aux réluctances 34, 35 et 36 en parallèle. On suppose que la valeur $R_{sat}$ (et donc $R_{gap}$) est connue; il faut d'ailleurs noter que la valeur $R_{gap}$ est imposée par la largeur de piste à inscrire, la largeur e de l'entrefer et l'épaisseur de la couche de matériau magnétique formant les pôles 22 et 23.

On cherche alors a calculer $\phi_{sat}$ et $I_0 = I_{max}$ (figure 8)

Le flux total correspond au flux maximal permis pour une excitation d'intensité $I_0$.

La considération du circuit de la figure 7 permet d'écrire la formule suivante :

$$\phi - \phi_{sat} = \frac{I - 1/3\, I_0}{R_{sat} + R_{gap}} \qquad (3)$$

Pour $I = I_0$, $\phi = \phi_{max}$, ainsi :

$$\phi_{max} - \phi_{sat} = \frac{2/3\, I_0}{R_{sat} - R_{gap}} = \frac{2/3\, I_0}{2\, R_{gap}} = \frac{I_0}{3\, R_{gap}} \qquad (4)$$

soit :

$$I_0 = 3R_{gap}(\phi_{max} - \phi_{sat}) \qquad (5)$$

On voit donc que le champ d'écriture maximal, qui correspond à $\phi_{max} - \phi_{sat}$, demande trois fois plus de courant que la valeur minimum du champ permettant une inscription.

Des formules (1) et (5) ci-dessus on déduit :

$$\phi_{sat} = \tfrac{1}{2}\, \phi_{max} \qquad (6)$$

Ainsi la moitié de la valeur de saturation du matériau des pôles 22 et 23 est disponible pour la création du champ magnétique d'écriture si, pour l'entrefer 20 et pour les pôles 22 et 23, on utilise des matériaux et configurations qui satisfont à la relation (2) ci-dessus.

Dans l'exemple où les pôles 22 et 23 sont en sendust, la densité maximale de flux correspondant à $\phi_{max}$ est d'environ 10 000 G. Si $R_{sat} = R_{gap}$ on peut donc profiter de 5 000 G pour l'écriture. L'intensité du courant $I_0$ est alors de l'ordre de 5 A.

Dans le cas général si on augmente la réluctance $R_{sat}$ introduite par la couche non magnétique 25 on augmente la proportion du flux magnétique qui est utilisable pour inscrire une information par rapport au flux $\phi_{sat}$ servant à saturer l'entrefer. En effet le flux maximum utile pour l'inscription est $\phi_{max} - \phi_{sat}$ et ladite

proportion est donc :

$$\frac{\sigma_{max} - \sigma_{sat}}{\varnothing_{sat}} = \frac{1}{\varnothing_{sat}} \cdot \frac{2/3 I_0}{R_{sat} + R_{gap}} = \frac{1}{\varnothing_{sat}} \frac{2\varnothing_{sat} R_{sat}}{R_{sat} + R_{gap}} = \frac{2 R_{sat}}{R_{sat} + R_{gap}}$$

Ce rapport est d'autant plus grand que $R_{sat}$ est grand par rapport à $R_{gap}$. Toutefois si $R_{sat}$ augmente il faut augmenter $I_0$.

**Revendications**

1. Dispositif matriciel à pluralité de têtes magnétiques, caractérisé en ce qu'il comprend, pour l'excitation des têtes, des conducteurs rectilignes (13, 14) s'étendant suivant des directions de lignes et des directions de colonnes et en ce que chacune des têtes magnétiques comporte un entrefer (20) à matériau magnétique à saturation inférieure à celle du matériau constituant les pôles (22, 23) de cette tête et tel que, lorsque ce matériau n'est pas saturé, le champ magnétique reste dans l'entrefer.

2. Dispositif selon la revendication 1, caractérisé en ce qu'il comporte un substrat (26) en matériau magnétique dont sont en saillie des blocs ($10_1$, $10_2$,...) formant des parties de circuit magnétique de chaque tête, et en ce que les pôles et l'entrefer sont déposés sur les extrémités des blocs.

3. Dispositif selon la revendication 1 ou 2, caractérisé en ce que la saturation de chaque entrefer (20) intervient pour une première valeur ($I_0/3$) des sommes des intensités des courants dans les deux conducteurs associés à cet entrefer, et la saturation des pôles (22, 23) de chaque tête intervient pour une seconde valeur ($I_0$) de ladite somme des intensités, cette seconde valeur étant environ le triple de la première.

4. Dispositif selon la revendication 3, caractérisé en que pour l'inscription d'informations, les lignes sont adressées par des impulsions successives de polarités opposées et en ce que la colonne est adressée par un courant d'intensité constante, la somme de cette intensité constante et de l'intensité de l'impulsion de même signe que ce courant constant étant suffisante pour inscrire une information tandis que la somme de l'intensité constante et de l'impulsion de polarité opposée est insuffisante pour inscrire une information, c'est-à-dire aimanter le support.

5. Dispositif selon la revendication 3, caractérisé en ce que pour l'inscription d'informations, les lignes sont adressées par des impulsions successives de polarités opposées, la valeur absolue de chaque impulsion de courant étant environ le double de ladite première valeur d'intensité alors que les colonnes sont parcourues par des courant d'intensité égale à ladite première valeur ($I_0/3$), le sens du courant dépendant de la nature de l'information à inscrire.

6. Dispositif selon la revendication 1, caractérisé en ce que le matériau de l'entrefer (20) est une ferrite.

7. Dispositif selon la revendication 1, caractérisé en ce que le matériau de l'entrefer (20) est un alliage de fer, d'aluminium et de silicium.

8. Dispositif selon la revendication 7, caractérisé en ce que le matériau constituant les pôles (22, 23) est un alliage de fer, d'aluminium et de silicium à teneur en aluminium inférieure à celle du matériau de l'entrefer.

9. Dispositif selon la revendication 1, caractérisé en ce que le matériau de l'entrefer est le même que le matériau des pôles et en ce que la section de l'entrefer est plus faible que celle des pôles.

10. Dispositif selon l'une quelconque des revendications précédentes, caractérisé en ce que le circuit magnétique dans lequel se trouvent les pôles (22, 23) et l'entrefer (20) comprend une réluctance (25) de valeur beaucoup plus importante que celle des réluctances des autres éléments du circuit quand le matériau de l'entrefer (20) n'est pas saturé.

**11.** Dispositif selon la revendication 10, caractérisé en ce que ladite réluctance (25) de forte valeur est constituée par une couche d'un matériau non magnétique.

**12.** Dispositif selon la revendication 11, caractérisé en ce que la couche (25) en matériau non magnétique est disposée entre les pôles (22, 23) et le reste du circuit magnétique.

**Claims**

**1.** Matrix device with a plurality of magnetic heads, characterized in that it comprises, for excitation of the heads, straight-line conductors (13, 14) extending along line directions and column directions, and in that each of the magnetic heads includes a gap (20) with magnetic material having saturation lower than that of the material constituting the poles (22, 23) of this head and such that, when this material is not saturated, the magnetic field remains in the gap.

**2.** Device according to Claim 1, characterized in that it includes a substrate (26) made of magnetic material blocks of which ($10_1$, $10_2$, ...) project, forming parts of a magnetic circuit of each head, and in that the poles and the gap are deposited on the ends of the blocks.

**3.** Device according to Claim 1 or 2, characterized in that the saturation of each gap (20) occurs for a first value ($I_0/3$) of the sums of the strengths of the currents in the two conductors associated with this gap, and the saturation of the poles (22, 23) of each head occurs for a second value ($I_0$) of the said sum of these strengths, this second value being about treble the first.

**4.** Device according to Claim 3, characterized in that, for writing information, the lines are addressed by successive pulses of opposite polarities and in that the column is addressed by a constant-strength current, the sum of this constant strength and of the strength of the pulse of the same sign as this constant current being sufficient to write information, while the sum of the constant strength and of the pulse of opposite polarity is insufficient to write information, that is to say to magnetize the medium.

**5.** Device according to Claim 3, characterized in that, for writing information, the lines are addressed by successive pulses of opposite polarities, the absolute value of each current pulse being about double the said first strength value, whereas the columns carry currents equal in strength to the said first value ($I_0/3$), the sense of the current depending on the nature of the information to be written.

**6.** Device according to Claim 1, characterized in that the material of the gap (20) is a ferrite.

**7.** Device according to Claim 1, characterized in that the material of the gap (20) is an alloy of iron, of aluminium and of silicon.

**8.** Device according to Claim 7, characterized in that the material constituting the poles (22, 23) is an alloy of iron, of aluminium and of silicon with an aluminium content lower than that of the material of the gap.

**9.** Device according to Claim 1, characterized in that the material of the gap is the same as the material of the poles and in that the cross-section of the gap is smaller than that of the poles.

**10.** Device according to any one of the preceding claims, characterized in that the magnetic circuit in which the poles (22, 23) and the gap (20) are located comprises a reluctance (25) of value much higher than that of the reluctances of the other elements of the circuit when the material of the gap (20) is not saturated.

**11.** Device according to Claim 10, characterized in that the said high-value reluctance (25) consists of a layer of a non-magnetic material.

**12.** Device according to Claim 11, characterized in that the layer (25) made of non-magnetic material is arranged between the poles (22, 23) and the rest of the magnetic circuit.

**Patentansprüche**

1. Matrixförmige Vorrichtung mit einer Mehrzahl von Magnetköpfen, dadurch gekennzeichnet, daß sie zur Anregung der Köpfe geradlinige Leiter (13, 14) aufweist, die sich in Zeilen- und Spaltenrichtung erstrecken, und daß jeder Magnetkopf einen Magnetspalt (20) aus einem Magnetmaterial mit einer geringeren Sättigung als der des Materials der Pole (22, 23) dieses Kopfes besitzt, derart, daß das Magnetfeld im Magnetspalt verbleibt, solange dieses Material nicht gesättigt ist.

2. Vorrichtung nach Anspruch 1, dadurch gekennzeichnet, daß sie ein Substrat (26) aus Magnetmaterial enthält, von dem Teile des Magnetkreises jedes Kopfes bildende Blöcke ($10_1$, $10_2$, ...) hervorstehen, und daß die Pole und der Magnetspalt auf den Enden der Blöcke angebracht sind.

3. Vorrichtung nach Anspruch 1 oder 2, dadurch gekennzeichnet, daß die Sättigung jedes Magnetspalts (20) bei einem ersten Wert ($I_0/3$) der Summe der Ströme in den beiden diesem Magnetspalt zugeordneten Leitern auftritt und daß die Sättigung der Pole (22, 23) jedes Kopfes bei einem zweiten Wert ($I_0$) dieser Summe der Ströme auftritt, der etwa dreimal so groß wie der erste Wert ist.

4. Vorrichtung nach Anspruch 3, dadurch gekennzeichnet, daß zum Aufzeichnen von Informationen die Zeilen durch aufeinanderfolgende Impulse entgegengesetzter Polarität adressiert werden und daß die Spalte durch einen konstanten Strom adressiert wird, wobei die Summe dieses konstanten Stroms und der Amplitude des Impulses mit der gleichen Polarität wie die des konstante Stroms ausreicht, um eine Information aufzuzeichnen, während die Summe dieses konstanten Stroms und der Amplitude des Impulses entgegengesetzter Polarität nicht ausreicht, um eine Information aufzuzeichnen, d.h. um den Träger zu magnetisieren.

5. Vorrichtung nach Anspruch 3, dadurch gekennzeichnet, daß zur Aufzeichnung von Informationen die Zeilen von aufeinanderfolgen Impulsen entgegengesetzter Polarität adressiert werden, deren Amplitude absolut etwa dem Doppelten des ersten Stromwerts entspricht, während die Spalten von Strömen eines Werts gleich dem ersten Wert ($I_0/3$) durchflossen werden, wobei die Stromrichtung von der Art der aufzuzeichnenden Information abhängt.

6. Vorrichtung nach Anspruch 1, dadurch gekennzeichnet, daß das Material des Magnetspalts (20) ein Ferrit ist.

7. Vorrichtung nach Anspruch 1, dadurch gekennzeichnet, daß das Material des Magnetspalts (20) eine Legierung aus Eisen, Aluminium und Silizium ist.

8. Vorrichtung nach Anspruch 7, dadurch gekennzeichnet, daß das Material der Pole (22, 23) eine Legierung aus Eisen, Aluminium und Silizium mit einem Aluminiumanteil ist, der geringer als der des Materials im Magnetspalt ist.

9. Vorrichtung nach Anspruch 1, dadurch gekennzeichnet, daß das Material des Magnetspalts dasselbe wie das der Pole ist und daß der Querschnitt des Magnetspalts kleiner als der der Pole ist.

10. Vorrichtung nach einem beliebigen der vorhergehenden Ansprüche, dadurch gekennzeichnet, daß der Magnetkreis, in dem sich die Pole (22, 23) und der Magnetspalt (20) befinden, einen deutlich größeren magnetischen Widerstand (25) als die anderen Elemente des Magnetkreises besitzt, wenn das Material des Magnetspalts (20) nicht gesättigt ist.

11. Vorrichtung nach Anspruch 10, dadurch gekennzeichnet, daß der magnetische Widerstand (25) großen Werts von einer Schicht eines nichtmagnetischen Materials gebildet wird.

12. Vorrichtung nach Anspruch 11, dadurch gekennzeichnet, daß die Schicht (25) aus nichtmagnetischem Material zwischen den Polen (22, 23) und dem Rest des Magnetkreises liegt.

# FIG_1

# FIG_2

FIG_3

FIG_4

# FIG_5

# FIG_6

$$\frac{1}{3} I_0 < |I| < I_0$$

# FIG_7

# FIG_8